# EUROPÄISCHE PATENTSCHRIFT

(11) **EP 0 312 727 B1**
(45) Veröffentlichungstag und Bekanntmachung des Hinweises auf die Patenterteilung: **15.09.1993**
(21) Anmeldenummer: 88113223.7
(22) Anmeldetag: 16.08.1988
(51) Int. Cl.: A01D 41/12, A01D 41/00

(54) **Mähdrescher**
Combine-harvester
Moissonneuse-batteuse

(30) Priorität: 22.10.1987 DE 3735669
(43) Veröffentlichungstag der Anmeldung: 26.04.1989
(73) Patentinhaber: Claas OHG beschränkt haftende offene Handelsgesellschaft, D-33426 Harsewinkel (DE)
(72) Erfinder: Heidjann, Franz, Dipl.-Ing., D-4834 Harsewinkel (DE); Hemker, Heinrich, Dipl.-Ing., D-4834 Harsewinkel (DE)

(56) Entgegenhaltungen:
- EP-A- 0 117 587
- DD-B- 24 550
- FR-A- 620 440
- FR-A- 2 234 844
- FR-A- 2 364 606
- GB-A- 1 544 108

## Beschreibung

Die Erfindung betrifft einen Mähdrescher, bestehend aus einem Fahrgestell, einem Gehäuse, einem in Tangentialfluß arbeitenden, aus Dreschtrommel und -korb gebildeten Dreschorgan, weiter bestehend aus an das Dreschorgan anschließenden Strohschüttlern mit darunter angeordnetem Rücklaufboden und einer Siebeinrichtung, wobei den Strohschüttlern eine im Mähdreschergehäuse gelagerte Drescheinrichtung nachgeordnet ist, gemäß der GB-A-1544108. Die Vorfahrtsgeschwindigkeit einer solchen Maschine im Ernteeinsatz wird begrenzt durch das Ansteigen von Körnerverlusten, die das Normalmaß überschreiten.

Aufgabe der Erfindung ist es, die Vorfahrtgeschwindigkeit und damit die Leistungsfähigkeit eines Mähdreschers in Anpassung an die jeweiligen Erntebedingungen maximal erhöhen zu können, ohne daß ein gesteigerter und nicht hinzunehmender Körnerverlust auftritt. Die Lösung der gestellten Aufgabe wird erfindungsgemäß darin gesehen, daß die den Strohschüttlern nachgeordnete Drescheinrichtung als eine im Axialfluß arbeitende und aus Rotor und Gehäuse bestehende Dresch- und Trenneinrichtung ausgebildet ist, die mit ihrer Länge die Breite des Maschinengehäuses überschreitet und doppelflutig arbeitend derartig ausgebildet ist, daß eine mittige Guteinlauföffnung und zwei seitliche Gutauslauföffnungen vorgesehen sind, wobei die Dresch- und Trenneinrichtung durch Anordnung von ausschwenkbaren Segmenten des Rotorgehäuses und verstellbare Gutleitklappen nur wahlweise in Wirkfunktion bringbar ist. Die DD-A-24550 beschreibt ein Tangentialdreschwerk bestehend aus Dreschtrommel und Dreschkorb mit einer im Bereich des Einlaufspaltes angeordneten abklappbaren Messerleiste, so daß das Dreschwerk wahlweise als eigentliches Dreschwerk (nach Abklappen der Messerleiste) oder als Häcksler (nach Abklappen des Dreschkorbes) einsetzt werden kann. Einen Hinweis auf die spezielle Lösung der vorliegender Anmeldung zugrundeliegenden Aufgabe ist dieser Schrift aber nicht zu entnehmen.

Anhand der Zeichnung sei die Erfindung beispielshaft erläutert. Es zeigen:

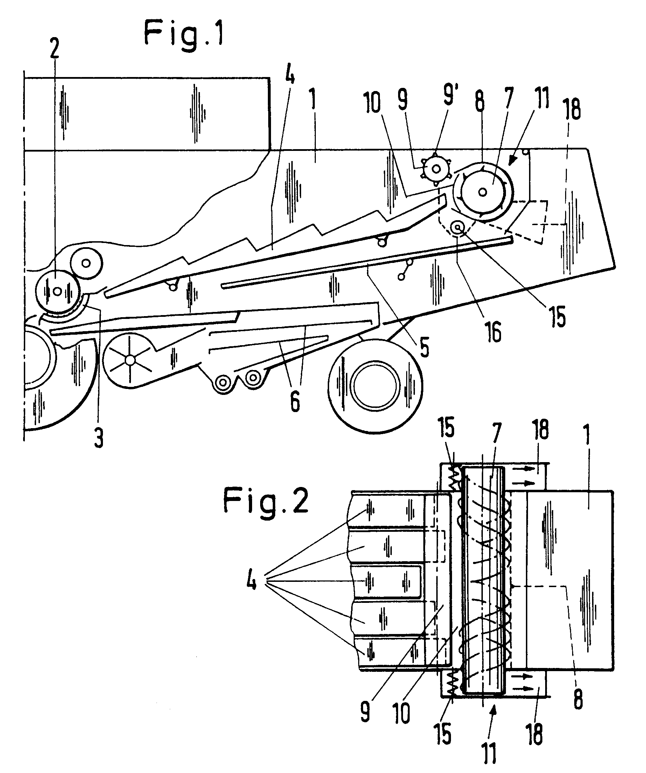

- Fig. 1: einen erfindungsgemäß gestalteten Mähdrescher in schematischer Teilseitenansicht;
- Fig. 2: eine schematische Teildraufsicht gemäß Fig. 1;

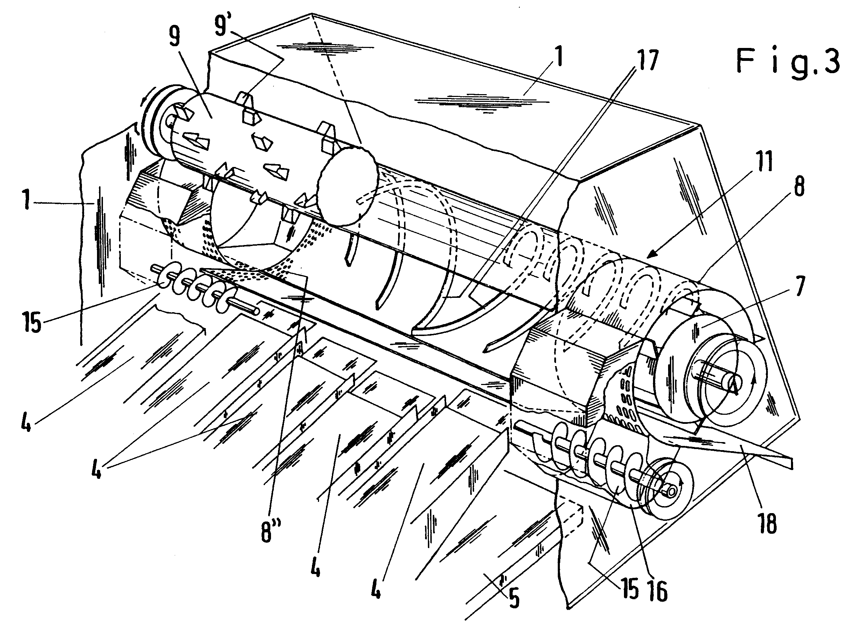

- Fig. 3: eine perspektivische Ansicht des rückwärtigen Mähdrescherteils;

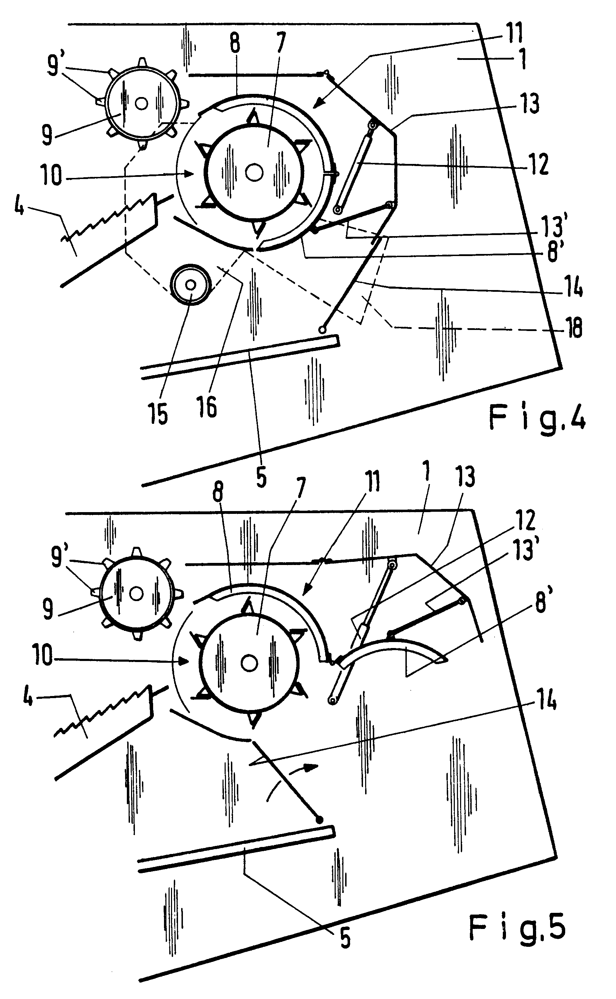

- Fig. 4: die den Schüttlern erfindungsgemäß nachgeschaltete Axialdruscheinrichtung in schematischer Seitenansicht der Wirkstellung und
- Fig. 5: die Ansicht nach Fig. 4 bei Wirkungslosigkeit der Axialdruscheinheit.

Mit 1 ist das Gehäuse eines Mähdreschers bezeichnet, in dem in bekannter Weise ein im Tangentialfluß arbeitendes, aus Dreschtrommel 2 und Dreschkorb 3 gebildetes Dreschorgan, anschließende Strohschüttler 4, ein Rücklaufboden 5 sowie eine Siebeinrichtung 6 angeordnet sind. Erfindungsgemäß ist den Schüttlern 4 eine an sich bekannte, aus Rotor 7 und Gehäuse 8 bestehende Dresch- und Trenneinrichtung 11 nachgeordnet. Eine Mitnehmer 9' aufweisende Einlegetrommel 9 ist oberhalb der Enden der Strohschüttler 4 vor der Guteinlauföffnung 10 der Axial- Dresch- und Trenneinrichtung 11 zur Sicherung der Übergabe des von den Schüttlern 4 kommenden, Restkörner enthaltenden Erntegutes in die Einrichtung 11 vorgesehen.

Wie die Zeichnungsfiguren 4 und 5 zeigen, läßt sich die Einrichtung 11 auch nur bedarfsweise in Wirkstellung bringen. Zu diesem Zweck ist ein Segment 8' des Trenngehäuses 8 über einen Zylinder 12 und ein durch das Haubenklappteil 13 und das Hebelpaar 13' gebildetes Gestänge 13; 13' ausschwenkbar und ist weiter eine verschwenkbare - in nicht dargestellter Weise betätigbare - Leitklappe 14 vorgesehen, die den Rücklaufboden 5 abschirmt, wenn das von den Schüttlern 4 kommende Stroh ohne zusätzliche Behandlung durch die Einrichtung 11 aus dem Maschinengehäuse abfließen soll.

Die in der Axial- Dresch- und Trenneinrichtung 11 ausgeschiedenen Körner gelangen durch Öffnungen 8'' des Rotorgehäuses 8 auf den Rücklaufboden 5 und zwar entweder direkt oder durch Transportschnecken 15 und Auffangmulden 16, die unterhalb der seitlichen, die Breite des Mähdreschergehäuses 1 überschreitenden Enden der Einrichtung 11 angeordnet sind. Die Zeichnungsfiguren zeigen deutlich, daß die Einrichtung 11 in ihrer Projektion oberhalb des Rücklaufbodens 5 gelagert ist. Dazu muß gegenüber bekannten Bauweisen der Rücklaufboden 5 gegebenenfalls verlängert sein. Das von den Schüttlern 4 kommende Erntegut wird der Axial-Dresch- und Trenneinheit 11 mittig über die Einlaßöffnung 10 zugeführt, von dort unter Einwirkung von Leitschienen 17 nach rechts und links in den Einflußbereich von Rotor 7 und Trenngehäuse 8 gebracht und verläßt die Einheit 11 als ausgedroschenes Stroh anschließend über seitliche Gutauslauföffnung 18.

## Patentansprüche

1. Mähdrescher bestehend aus einem Fahrgestell, einem Gehäuse (1), einem in Tangentialfluß arbeitenden, aus Dreschtrommel (2) und -korb (3) gebildeten Dreschorgan, weiter bestehend aus an das Dreschorgan anschließenden Strohschüttlern (4) mit darunter angeordnetem Rücklaufboden (5) und einer Siebeinrichtung (6), wobei den Strohschüttlern (4) eine im Mähdreschergehäuse (1) gelagerte Drescheinrichtung (11) nachgeordnet ist,
**dadurch gekennzeichnet,**
daß die den Strohschüttlern nachgeordnete Drescheinrichtung als eine im Axialfluß arbeitende und aus Rotor (7) und Gehäuse(8) bestehende Dresch- und Trenneinrichtung (11) ausgebildet ist, die mit ihrer Länge die Breite des Maschinengehäuses (1) überschreitet und doppelflutig arbeitend derart ausgestaltet ist, daß eine mittige Guteinlauföffnung (10) und zwei seitliche Gutauslauföffnungen (18) vorgesehen sind, wobei die Dresch- und Trenneinrichtung (11) durch Anordnung von ausschwenkbaren Segmenten (8') des Rotorgehäuses (8) und verstellbare Gutleitklappen (14) nur wahlweise in Wirkfunktion bringbar ist.

2. Mähdrescher nach Anspruch 1
**dadurch gekennzeichnet,**
daß die Dresch- und Trenneinrichtung (11) Projektion oberhalb des rückwärtigen Endes des Rücklaufbodens (5) angeordnet ist.

3. Mähdrescher nach Anspruch 1
**dadurch gekennzeichnet,**
daß im Bereich der die Breite des Maschinengehäuses (1) überschreitenden seitlichen Enden der Dresch- und Trenneinrichtung (11) unterhalb derselben Kornauffangmulden (16) und Transportschnecken (15) zur seitlichen Zuführung der durch die Öffnungen (8) des Gehäuses (8) austretenden Körner hin zum Rücklaufboden (5) vorgesehen sind.

4. Mähdrescher nach Anspruch 1
**dadurch gekennzeichnet,**
daß oberhalb der Enden der Strohschüttler (4) im Bereich vor der Guteinlauföffnung (10) der Dresch- und Trenneinrichtung (11) eine unterschlächtig arbeitende, Mitnehmer (9) aufweisende Einlegetrommel (9) angeordnet ist.

5. Mähdrescher nach Anspruch 1
**dadurch gekennzeichnet,**
daß der Gehäusemantel (8) der Dresch- und Trenneinrichtung (11) innenseitig in an sich bekannter Weise mit zu den beiden Gutauslauföffnungen (18) führenden Leitschienen (17) besetzt ist.

6. Mähdrescher nach Anspruch 1
**dadurch gekennzeichnet,**
daß den seitlichen Gutauslauföffnungen (18) Mittel in Gestalt von Leitblechen oder dergleichen zum mittigen Zusammenführen des aus den Öffnungen (18) austretenden Strohes zugeordnet sind.

7. Mähdrescher nach Anspruch 1
**dadurch gekennzeichnet,**
daß jedem der beiden seitlichen Gutauslauföffnungen (18) ein an sich bekanntes Häckselaggregat zugeordnet ist.

## Claims

1. A combine harvester comprising a chassis, a housing (1), a threshing unit which operates in the tangential flow mode and which comprises a threshing drum (2) and concave (3), further comprising straw walkers (4) adjoining the threshing unit with a return bottom (5) arranged therebeneath and a sieving device (6), wherein arranged downstream of the straw walkers (4) is a threshing apparatus (11) mounted in the combine harvester housing (1), characterised in that the threshing apparatus which is arranged downstream of the straw walkers is in the form of a threshing and separating apparatus (11) which operates in the axial flow mode and which comprises a rotor (7) and a housing (8) and which with its length exceeds the width of the machine housing (1) and which operating with a double flow is of such a configuration that there are provided a central material intake opening (10) and two lateral material outlet openings (18), wherein the threshing and separating apparatus (11) can be only selectively brought into operative function by the arrangement of segments (8'), which can be pivoted away, of the rotor housing (8), and displaceable material guide flaps (14).

2. A combine harvester according to claim 1 characterised in that the threshing and separating apparatus (11) is arranged in projection above the rearward end of the return bottom (5).

3. A combine harvester according to claim 1 characterised in that disposed in the region of the lateral ends of the threshing and separating apparatus (11), which exceed the width of the machine housing (1), and beneath the threshing and separating apparatus, are grain catch troughs (16) and transportation augers (15) for laterally feeding the grains which issue through the openings (8) of the housing (8) to the return bottom (5).

4. A combine harvester according to claim 1 characterized in that a feed-in drum (9) which operates in an undershoot mode and which has entrainment members (9') is arranged above the ends of the straw walkers (4) in the region upstream of the material intake opening (10) of the threshing and separating apparatus (11).

5. A combine harvester according to claim 1 characterized in that the housing peripheral portion (8) of the threshing and separating apparatus (11) is fitted on its inside in per se known manner with guide bars (17) which lead to the two material outlet openings (18).

6. A combine harvester according to claim 1 characterized in that associated with the lateral material outlet openings (18) are means in the form of guide plates or the like for centrally bringing together the straw issuing from the openings (18).

7. A combine harvester according to claim 1 characterized in that a per se known chaff cutter unit is associated with each of the two lateral material outlet openings (18).

## Revendications

1. Moissonneuse-batteuse composée d'un carter, d'un châssis (1), d'un organe de battage fonctionnant en flux tangentiel et constitué par un tambour de battage (2) et un contre-batteur (3), composé en outre par des secoueurs de paille (4) raccordés à l'organe de battage et comprenant un plateau de retour (5) disposé au-dessous ainsi qu'un dispositif de tamisage (6), un dispositif de battage (11) monté dans le carter (1) de la moissonneuse-batteuse étant disposé à la suite des secoueurs de paille (4), caractérisée en ce que le dispositif de battage monté à la suite des secoueurs de paille est constitué par un dispositif de battage et de séparation (11) fonctionnant en flux axial et comprenant un rotor (7) et un carter (8), qui dépasse par sa longueur la largeur du carter (1) de la machine et qui est constitué pour travailler en double flux, et en ce que sont prévues une ouverture d'entrée centrale (10) pour le produit et deux ouvertures de sortie latérales (18), le dispositif de battage et de séparation (11) pouvant être amené à fonctionner seulement et au choix par un agencement de segments (8') du carter (8 ) du rotor qui peuvent être pivotés vers l'extérieur et de volets de guidage de produit réglables (14).

2. Moissonneuse-batteuse selon la revendication 1, caractérisée en ce que le dispositif de battage et de séparation (11) est disposé en projection au-dessus de l'extrémité arrière du plateau de retour (5).

3. Moissonneuse-batteuse selon la revendication 1, caractérisée en ce que dans la région des extrémités latérales du dispositif de battage et de séparation (11) qui dépassent la largeur du carter (1) de la machine et au-dessous de celles-ci sont prévues des auges de réception de grain (16) et des vis transporteuses (15) pour l'acheminement latéral des grains qui sortent par les ouvertures (8'') du carter (8) vers le plateau de retour (5).

4. Moissonneuse-batteuse selon la revendication 1, caractérisée en ce qu'un tambour d'insertion (9) comprenant des éléments d'entraînement (9') et fonctionnant en étant mu par le dessous est monté au-dessus des extrémités des secoueurs de paille (4) dans la région située à l'avant de l'ouverture d'entrée de produit (10) du dispositif de battage et de séparation (11).

5. Moissonneuse-batteuse selon la revendication 1, caractérisée en ce que l'enveloppe (8) du carter du dispositif de battage et de séparation (11) est équipée à l'intérieur d'une façon connue en soi de rails de guidage (17) conduisant vers les deux ouvertures de sortie de produit (18).

6. Moissonneuse-batteuse selon la revendication 1, caractérisée en ce que des moyens ayant la forme de tôles de guidage ou analogues pour diriger en commun et centralement la paille qui sort par les ouvertures (18) sont associés aux ouvertures de sortie de produit latérales (18).

7. Moissonneuse-batteuse selon la revendication 1, caractérisée en ce qu'une unité de hachage connue en soi est associée à chacune des deux ouvertures de sortie de produit latérales (18).
